# EUROPEAN PATENT SPECIFICATION

(11) **EP 2 693 528 B1**
(45) Date of publication and mention of the grant of the patent: **21.12.2016**
(21) Application number: 13003720.3
(22) Date of filing: 25.07.2013
(51) Int. Cl.: H01M 2/16, H01M 2/28, H01M 4/56, H01M 4/57, H01M 4/62

(54) **HIGH EFFICIENCY LEAD ACID BATTERY FOR THE STOP AND START CYCLE**
HOCHEFFIZIENTE BLEISÄUREBATTERIE FÜR DEN STOPP- UND STARTZYKLUS
BATTERIE AU PLOMB À HAUTE EFFICACITÉ POUR CYCLE MARCHE ET ARRÊT

(30) Priority: 31.07.2012 IT MI20121345
(43) Date of publication of application: 05.02.2014
(73) Proprietor: Fabbrica Italiana Accumulatori Motocarri Montecchio - F.I.A.M.M. SPA, In Forma Abbreviata FIAMM SPA, 36075 Montecchio Maggiore (VI) (IT)
(72) Inventor: Aliberti, Roberto, 36075 Montecchio Maggiore (VI) (IT); Kapkov, Nikola, 36075 Montecchio Maggiore (VI) (IT); Salvucci, Giancarlo, 36075 Montecchio Maggiore (VI) (IT)
(74) Representative: Lecce, Giovanni

(56) References cited:
- EP-A1- 0 336 170
- EP-A1- 1 965 454
- EP-A2- 2 466 678
- US-A- 5 336 573
- US-A1- 2007 259 260

## Description

The present invention relates to a high efficiency lead acid battery with liquid electrolyte for the Stop &Start cycle.

More specifically, the present invention relates to a battery as defined above, especially suitable for equipping so-called hybrid vehicles.

It is widely known that the automobile sector is undergoing a period of significant change related to the increasingly strict requirements of European legislation aimed at safeguarding the environment, by reducing fuel consumption as well as emissions of carbon dioxide; the emission levels of vehicles will be limited to 120 grams/km by 2015, and 95g/km by 2020.

These requirements have led manufacturers to increase their R&D and thereby identify vehicle configurations able to comply with the limits imposed. So far the result of this research has been the development of a new class of so-called hybrid vehicles; the so-called hybrid class is, in turn divided into different categories such as "micro", "mild", ""medium", "full" and "plug-in" and also comprises a fully electric class, in which the traction of the vehicle is guaranteed by a specific battery system. The hybrid class of vehicles, in its various subcategories, is characterised by systems and technologies suitable for reducing fuel consumption and CO₂ emissions, among which the S&S system, which provides for stopping the engine when the vehicle is at a standstill, for example in a traffic jam or at the traffic lights, recovering braking energy, making the battery cut-in during acceleration to support the engine and to power the air-conditioning or heating system when the engine is turned off in stopped conditions. These requirements make the functioning of the battery central and in this sector too, research is aimed at obtaining a battery configuration suitable to support the specific stresses of an electric hybrid architecture; in particular, such solution requires high recharging efficiency in recovering braking energy and in the very high number of charging/discharging cycles characterised by high rates, in the stop phase, i.e. when the vehicle is stopped at the traffic lights or in a traffic jam, followed by same number of "start "phases, namely of restarting the engine, all in states of partial charging of the battery. Lead acid batteries in their traditional configuration are unable to support these new functions; the ability to operate efficiently in partially charged states is in fact one of the main limitations of the traditional lead battery on account of the sulphation phenomena of the negative plates which drastically reduces the ability of the batteries to recharge inducing a loss of operativity thereof. A further limiting factor of the lead battery in a traditional configuration is its recharging efficiency at high rates; in these conditions in fact the secondary reactions of gasification become predominant over recharging on account of the limits in the ionic diffusion of the electric elements involved, inducing a progressive accumulation of non-conductive lead sulphate on the surface of the negative plate, a high consumption of water and consequent progressive inability of the battery to recharge itself efficiently. To reduce such loss of efficiency of the batteries, due in particular to the accumulation of sulphate at the negative electrode it is therefore necessary to limit the secondary reactions of the development of gases and improve the recharging reactions.

US2007259260 discloses a rechargeable lead acid battery with porous polyethylene separators and with a layer of fibre on each surface of the separator.

The microporous layers of the separator and of the fibre have a thickness of at least 100 µm; the mean length of the fibre forming the fibre layers is over 1 mm and the diameter is over 1 µm. The fibre layers are firmly attached to the layers of the separators along the edges. On at least one of the opposite surfaces, each separator has a plurality of ribs.

EP2466678 discloses a secondary lithium battery with a non-aqueous electrolytic solution and a highly viscous stable solvent, in which the separator placed between the anode and cathode comprises a porous, non woven substrate made of a polymer selected for example from the group comprising polyester, polyamide, polycarbonate. Such porous substrate has a thickness of 1 to 100 µm.

The purpose of the present invention is to overcome the aforementioned drawbacks of the known lead acid batteries.

More specifically, the purpose of the present invention is to provide a lead acid battery or accumulator suitable to guarantee a high overall efficiency in its use in hybrid/electric class vehicles.

A further purpose of the invention is to provide a lead acid battery suitable to guarantee highly efficient recharging in recovering braking energy and in the "Stop & Start" cycles.

A further purpose of the invention is to provide a lead acid battery suitable to operate efficiently even in partially recharged states and to withstand strong rates.

A further purpose of the invention is to make available to users a lead acid battery for hybrid/electric class vehicles suitable to ensure a high level of resistance and reliability over time, and furthermore such as to be produced economically.

These and other purposes are achieved by the high efficiency lead acid battery with liquid electrolyte for the Stop &Start cycle of the present invention, specially adapted to equip hybrid/electric class vehicles, according to the main claim.

The construction and functional characteristics of the high efficiency lead acid battery for the Stop &Start cycle of the present invention will be more clearly comprehensible from the detailed description below in which reference is made to the appended drawings which show a preferred and non-limiting embodiment and wherein:
figure 1 schematically shows a longitudinal cross-section of the high efficiency lead acid battery of the present invention;
figure 2 schematically shows, in longitudinal cross-section, a positive electrode of said battery;
figure 3 schematically shows a longitudinal cross-section of a negative electrode of said battery;
figure 4 schematically shows a front view of said negative electrode.

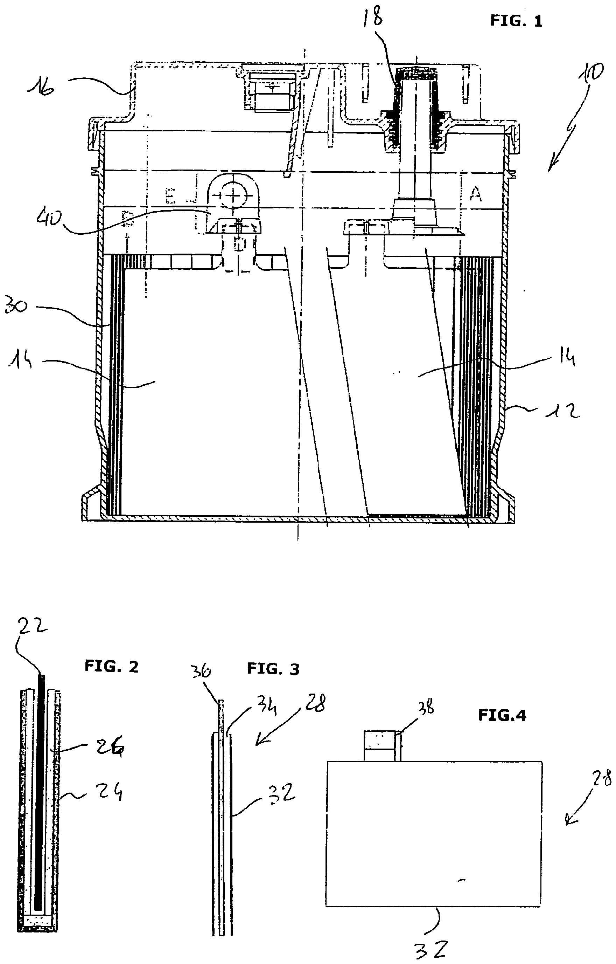

With reference to the aforesaid figures, the high efficiency lead acid battery for the Stop &Start cycle of the present invention , globally denoted by reference numeral 10 in figure 1, comprises a container body or monobloc 12 made of plastic, internally divided into a plurality of cells two of which indicated by reference numeral 14 in figure 1. One or more negative plates or electrodes and one or more positive plates or electrodes are arranged in said cells, immersed in an electrolyte and delimited by porous separators; the electrodes are electrically connected, between the various cells constituting the monobloc 12 by means of electrode/electrode and cell/cell connection elements. Said battery further comprises a cover 16 which closes onto the container body 12 so as to hermetically seal it, and fitted with plugs 20 which close the accesses to the cells 14 and incorporate the truncated cone terminals 18.

According to the invention, each positive electrode of the battery 10, denoted by reference numeral 22 in figure 2, is enclosed inside a porous separator, formed of two overlaid layers. In particular, each of the separators placed between the different electrodes, alternately positive and negative is formed of two overlaid layers 24, the first of which outermost in relation to the positive electrode 22, is made of polyethylene, while the second and innermost layer in relation to said positive electrode is made of non woven polyester having a thickness of 0.1 to 1.0 mm at 5 kPa.

The material of said second layer 26 preferably has a grammage of 30 to 60 gm⁻² and an electric resistance of less than 0.05 ohm cm⁻².Said separator in two layers 24 and 26, indicated by reference numeral 30 in figure 1, ensures a high level of constriction of the positive active mass at the grid forming the electrode 22 and limits the shedding phenomena and consistent variations in volume which the electrodes encounter in conditions of progressive discharging and recharging characterising the functioning of the battery in hybrid vehicles.

The chemical physical characteristics described above of the polymer-based material composing the separator are such as to permit an elevated compression between the positive and negative electrodes inside each single cell; this ensures efficient contact of the polyester-based layer of the separator with the positive electrode , which translates into an efficient constriction of the positive active mass at the grid, limiting the shedding phenomena and variations in volume mentioned above.

Each negative plate or negative electrode, globally denoted by reference numeral 28 in figure 3, is delimited by a containment layer 32 consisting of stratified, polyester-based, non woven. In particular, said containment layer 32 is composed of a polyester base of not less than 60%w, a heat bonding polyester, if present, of 0-30%w, a viscose if present, 0-30%w and a binding resin, if present, of 0-30%w. Overall, the non woven forming the containment layer 32 preferably has a grammage of 10 to 16 g.m⁻² and a thickness of 0.06 to 0.12 mm. Said containment layer guarantees efficient containment of the active mass, indicated by reference numeral 34 in figure 3, at the metal support grid placed therein and indicated by reference numeral 36 in the same figure.

The negative active mass of the high efficiency lead battery is designed to reduce lead sulphate accumulation phenomena induced by operating in partially charged states and at high discharging and recharging rates. In fact the lead sulphate formed in discharge can no longer be converted into spongy lead during recovery of the braking energy on account of the high rates making the secondary gasification reactions predominant. To reduce such phenomenon the negative active mass would need to be kept at a high surface area and this happens , in the present invention, by introducing carbon based materials in the form of carbon black, graphite, activated carbon or alternatively, a mixture thereof , in a concentration of 0.3 % to 1.0% and of at least two different organic expanders. This determines a high degree of optimisation of the negative active mass compared to a traditionally configured lead battery generally containing carbon, in the form of carbon black, in variable concentrations generally from approximately 0.1% to 0.4% and a single and sole type of organic expander. The carbon-based materials inside the negative active mass in fact maintain a conductive network through the material of the negative plate especially at low charging states where the concentration of non-conductive lead sulphate is high, and increase the surface area of the negative active mass.

According to a further advantageous characteristic of the invention, the flags or elements projecting from the top of the positive 22 and negative 28 electrodes are subjected to a treatment suitable for respectively reducing the corrosion and sulphation phenomena. As shown schematically in figure 4, in which a front view of the negative electrode 28 is illustrated by way of example, the flag 38 projecting from it is coated in a lead and tin alloy at least on the upper part thereof ;said coating preferably extends for a height of at least three millimetres starting from the upper end of each of the flags 38.The composition of said coating alloy is such that the minimum percentage of tin is 40%. According to a further advantageous characteristic of the invention, the electric electrode/electrode and cell/cell connection elements, one of which is indicated by reference numeral 40 in figure 1, are made from lead based alloys with a tin content of 0.5 to 5% and without antimony. The use of non-antimonial alloys reduces the corrosion phenomena and water consumption. Instead, the alloys used to make the support grids for the lead-based negative electrodes advantageously contain tin in a quantity of 0.8 to 1.3% and calcium in a quantity of 0.03 to 0.07%.

This causes a significant increase in resistance of the grids to the specific stresses which the battery 10 is subjected to in the functioning typical of hybrid/electric class vehicles.

Moreover, in the battery 10 according to the present invention the container body 12 is sized so as to permit the presence of a reserve of liquid electrolyte of at least 35 mm starting from the upper end of the electrodes 22 and 28;such height is shown schematically by the arrow "A" in figure 1. The aforementioned technology characteristic of hybrid vehicles designed to reduce fuel consumption and carbon dioxide emissions implicates the ability of the battery to operate in states of partial charging and to accept high charging rates. In these conditions, as previously described, the secondary reactions of electrolysis of the water and consequent development of gas, is greatly "facilitated". This induces a progressive loss of electrolyte which translates into a progressive loss of the ability of the battery itself to charge/discharge; for this reason, a further advantageous characteristic of the invention is the guarantee of a large reserve of electrolyte, over 40% more than that of a traditional lead battery, which enables the battery to withstand a greater number of charging and discharging cycles at high rates. Such a large reserve of electrolyte is ensured by means of a specific sizing of the electrodes the height of which (without the contribution deriving from the sizing of the flag) is advantageously equal to 105±5 mm or in any case such as to guarantee a ratio of the height of the electrodes (without flag) and height of the cell, occupied by the electrolyte volume, of not more than 0.75.

The experimental tests conducted by the applicant confirm that the battery 10 configured according to the characteristics described above is able to satisfy the requirements of the hybrid-electric class of vehicles, with particular reference to efficient recharging in recovering braking energy and in the "Stop & Start" cycles. The battery, according to the configuration of the present invention, is in fact able to efficiently perform the aforesaid "Stop and Start" cycles, characterised by a depth of discharge of 1.5%, maintaining its operative functioning even after exceeding a total regime of discharged Ah of 750 times its nominal capacity. The battery according to the present invention, also proved efficient in tests conducted in conditions of partial recharging, withstanding high rates without difficulty.

Despite the invention having been described above with particular reference to one of its embodiments, given solely by way of a non-limiting example, numerous modifications and variants will appear evident to a person skilled in the art in the light of the above description.

The present invention therefore sets out to embrace all the modifications and variants which fall within the scope of the following claims.

## Claims

1. A high efficiency lead acid battery with liquid electrolyte for the Stop &Start cycle (10), especially suitable for equipping hybrid-electric class vehicles, comprising a container body (12) in plastic material sub-divided internally into a plurality of cells (14) in which one or more negative plates or electrodes (28) and one or more positive plates or electrodes (22) are positioned immersed in an electrolyte and delimited by porous separators, wherein connection elements (40) are positioned between the electrodes (22-28) and cells (14),further comprising a cover (16) which closes so as to hermetically seal the container body (12), fitted with plugs (20) which close the accesses to the cells (14) and incorporating the truncated cone terminals (18), said separators being formed of two overlaid layers (24), (26), the first of which outermost in relation to the positive electrode (22) and made of polyethylene, while the second and innermost layer (26) is made of non woven polyester having a thickness of 0.1 to 1.0 mm at an applied pressure of 5 kPa., **characterised in that** the containment layer of each negative plate or electrode (28) is composed of stratified, polyester-based non woven, present in a quantity of not less than 60% .

2. The lead acid battery according to claim 1, **characterised in that** the material composing said layer (26) of the separator of each positive electrode has a grammage of 30 to 60 g.m⁻² and an electric resistance of less than 0.05 ohm cm⁻².

3. The lead acid battery according to claim 1, **characterised in that** the non woven containment layer of the negative electrodes (28) comprises a proportion of heat bonding polyester of not more than 30%w.

4. The lead acid battery according to claim 3, **characterised in that** the non woven containment layer of the negative electrodes (28) comprises a proportion of viscose and bonding resin of not more than 30%w for each of said components.

5. The lead acid battery according to claim 4, **characterised in that** the non woven containment layer of the negative electrodes (28) has a grammage of 10- 16 g.m⁻² and a thickness of 0.06 to 0.12 mm.

6. The battery according to claim 1, **characterised in that** it efficiently performs the "Stop and Start" cycles having a depth of discharge of 1.5%, reaching a total regime of discharged Ah not less than 750 times its nominal capacity.

7. The lead acid battery according to claim 1, **characterised in that** the positive (22) and negative (28) electrodes are subjected to a coating treatment on their upper projecting flag part, i.e. lead (38).

8. The lead acid battery according to claim 7, **characterised in that** said flags (38) of the electrodes (22) and/or (28) are coated with a lead and tin alloy which extends for a height of at least 3 mm starting from the upper end of such flags, in said coating alloy the minimum quantity of tin being 40%.

9. The lead acid battery according to claim 1, **characterised in that** the connection elements (40) are made from lead-based alloys with a tin content of 0.5 to 5%.

10. The lead acid battery according to claim 1, **characterised in that** the negative plates (28) are made from lead alloy comprising tin in a quantity of 0.8 to 1.3% and calcium in a quantity of 0.03 to 0.07%.

11. The lead acid battery according to claim 8, **characterised in that** the negative plates (28) consist of a negative mass containing at least two organic expanders and carbon-based materials, in the form of carbon black, activated carbon, graphite or alternatively a mixture thereof, in the range of 0.3% to 1.0%.

12. The lead acid battery according to claim 1, **characterised in that** the level of the electrolyte in the container body (12) exceeds the top end of the electrodes (22) and (28) by at least 35 mm.

## Patentansprüche

1. Hocheffiziente Bleisäurebatterie mit Flüssigelektrolyt für den Start- und Stop-Zyklus (10), insbesondere geeignet zur Ausstattung von Fahrzeugen der hybrid-elektrischen Klasse umfassend einen Behälterkörper (12) in Kunststoffmaterial, der innen in mehrere Zellen (14) unterteilt ist, in welchen eine oder mehrere negative Platten oder Elektroden (28) und eine oder mehrere positive Platten oder Elektroden (22) in den Elektrolyt getaucht und durch poröse Separatoren begrenzt positioniert sind, wobei Verbindungselemente (40) zwischen den Elektroden (22-28) und Zellen (14) positioniert sind, ferner umfassend eine Abdeckung (16), welche dahingehend schließt, den Behälterkörper (12) hermetisch abzudichten, die an Verschlüsse (20) angepasst ist, welche die Zugänge zu den Zellen (14) verschließen und die kegelstumpfförmigen Anschlüsse (18) enthalten, wobei die Separatoren aus zwei übereinander gelegten Schichten (24), (26) ausgebildet sind, von welchen die erste, in Beziehung zu der positiven Elektrode (22) äußerste aus Polyethylen hergestellt ist, während die zweite und innerste Schicht (26) aus nicht gewebtem Polyester mit einer Dicke von 0,1 bis 1,0 mm bei einem angelegten Druck von 5 kPa hergestellt ist, **dadurch gekennzeichnet, dass** die Kapselungsschicht von jeder negativen Platte oder Elektrode (28) aus geschichtetem Polyester-basierten Vliesstoff zusammengesetzt ist, das in einer Menge von nicht weniger als 60% vorliegt.

2. Bleisäurebatterie nach Anspruch 1, **dadurch gekennzeichnet, dass** das Material, welches die Schicht (26) des Separators von jeder positiven Elektrode bildet, eine flächenbezogene Masse von 30 bis 60 g.m⁻² und einen elektrischen Widerstand von weniger als 0,05 ohm cm⁻² aufweist.

3. Bleisäurebatterie nach Anspruch 1, **dadurch gekennzeichnet, dass** die nicht gewebte Kapselungsschicht der negativen Elektroden (28) eine Proportion eines wärmebindenden Polyesters von nicht mehr als 30 Gew.-% umfasst.

4. Bleisäurebatterie nach Anspruch 3, **dadurch gekennzeichnet, dass** die nicht gewebte Kapselungsschicht der negativen Elektroden (28) eine Proportion von Viskose und Bindungsharz von nicht mehr als 30 Gew.-% für jede Komponente umfasst.

5. Bleisäurebatterie nach Anspruch 4, **dadurch gekennzeichnet, dass** die nicht gewebte Kapselungsschicht der negativen Elektroden (28) eine flächenbezogene Masse von 10 - 16 g.m⁻² und eine Dicke von 0,06 bis 0,12 mm aufweist.

6. Batterie nach Anspruch 1, **dadurch gekennzeichnet, dass** sie effizient die "Stop- und Start"-Zyklen mit einer Tiefe der Entladung von 1,5% ausführt, wobei eine Gesamtbilanz entladener Ah von nicht weniger als 750 mal seiner nominalen Kapazität erreicht werden.

7. Bleisäurebatterie nach Anspruch 1, **dadurch gekennzeichnet, dass** die positiven (22) und negativen (28) Elektroden einer Beschichtungsbehandlung auf deren oberen hervorstehenden Fahnenteil, das heißt mit Blei (38), unterzogen werden.

8. Bleisäurebatterie nach Anspruch 7, **dadurch gekennzeichnet, dass** die Fahnen (38) der Elektroden (22) und/oder (28) mit einer Blei- und Zinnlegierung beschichtet sind, welche sich für eine Höhe von zumindest 3 mm beginnend von dem oberen Ende einer solchen Fahne erstreckt, wobei in der Beschichtungslegierung die minimale Quantität von Zinn 40% ist.

9. Bleisäurebatterie nach Anspruch 1, **dadurch gekennzeichnet, dass** die Verbindungselemente (40) aus bleibasierten Legierungen mit einem Zinnanteil von 0,5 bis 5% hergestellt sind.

10. Bleisäurebatterie nach Anspruch 1, **dadurch gekennzeichnet, dass** die negativen Platten (28) aus Bleilegierung umfassend Zinn in einer Quantität von 0,8 bis 1,3% und Kalzium in einer Quantität von 0,03 bis 0,07% hergestellt sind.

11. Bleisäurebatterie nach Anspruch 8, **dadurch gekennzeichnet, dass** die negativen Platten (28) aus einer negativen Masse enthaltend zumindest zwei organische Expander und kohlenstoffbasierte Materialien in der Form von Ruß, Aktivkohle, Graphit oder alternativ ein Gemisch davon in dem Bereich von 0,3 bis 1% besteht.

12. Bleisäurebatterie nach Anspruch 1, **dadurch gekennzeichnet, dass** das Niveau des Elektrolyten in dem Behälterkörper (12) das obere Ende der Elektroden (22) und (28) um zumindest 35 mm übersteigt.

## Revendications

1. Une batterie plomb-acide à haute efficacité avec électrolyte liquide pour le cycle marche et arrêt (10), appropriée en particulier pour équiper des véhicules de classe hybride-électrique, comprenant un corps de contenant (12) en matière plastique sous-divisé intérieurement en une pluralité de cellules (14) dans lesquelles une ou plusieurs plaques ou électrodes négatives (28) et une ou plusieurs plaques ou électrodes positives (22) sont positionnées immergées dans un électrolyte et délimitées par des séparateurs poreux, des éléments de connexion (40) étant positionnés entre les électrodes (22-28) et les cellules (14), comprenant en outre un couvercle (16) qui se ferme de façon à sceller hermétiquement le corps de contenant (12), muni de bouchons (20) qui ferment les accès aux cellules (14) et incorporant les bornes tronconiques (18), lesdits séparateurs étant formés de deux couches superposées (24), (26), la première d'entre elles la plus extérieure par rapport à l'électrode positive (22) et en polyéthylène, tandis que la deuxième couche et la plus intérieure (26) est en polyester non tissé ayant une épaisseur de 0,1 à 1,0 mm à une pression appliquée de 5 kPa, **caractérisée en ce que** la couche de confinement de chaque plaque ou électrode négative (28) est composée de stratifié, non tissé à base de polyester, présent dans une quantité non inférieure à 60 %.

2. La batterie plomb-acide selon la revendication 1, **caractérisée en ce que** le matériau composant ladite couche (26) du séparateur de chaque électrode positive a un grammage de 30 à 60 g.m⁻² et une résistance électrique inférieure à 0,05 ohm cm⁻².

3. La batterie plomb-acide selon la revendication 1, **caractérisée en ce que** la couche de confinement non tissée des électrodes négatives (28) comprend une proportion de polyester thermoliant de pas plus de 30 % en poids.

4. La batterie plomb-acide selon la revendication 3, **caractérisée en ce que** la couche de confinement non tissée des électrodes négatives (28) comprend une proportion de viscose et de résine liante de pas plus de 30 % en poids pour chacun desdits composants.

5. La batterie plomb-acide selon la revendication 4, **caractérisée en ce que** la couche de confinement non tissée des électrodes négatives (28) a un grammage de 10-16 g.m⁻² et une épaisseur de 0,06 à 0,12 mm.

6. La batterie selon la revendication 1, **caractérisée en ce qu'**elle réalise efficacement les cycles « marche et arrêt » ayant une profondeur de décharge de 1,5 %, atteignant un régime total d'Ah déchargé non inférieur à 750 fois sa capacité nominale.

7. La batterie plomb-acide selon la revendication 1, **caractérisée en ce que** les électrodes positives (22) et négatives (28) sont soumises à un traitement d'enrobage sur leur partie de languette saillante supérieure, c'est-à-dire leur tige (38).

8. La batterie plomb-acide selon la revendication 7, **caractérisée en ce que** lesdites languettes (38) des électrodes (22) et/ou (28) sont enrobées d'un alliage de plomb et d'étain qui s'étend sur une hauteur d'au moins 3 mm à partir de l'extrémité supérieure de ces languettes, la quantité minimale d'étain dans ledit alliage d'enrobage étant de 40 %.

9. La batterie plomb-acide selon la revendication 1, **caractérisée en ce que** les éléments de connexion (40) sont en alliages à base de plomb avec une teneur en étain de 0,5 à 5 %.

10. La batterie plomb-acide selon la revendication 1, **caractérisée en ce que** les plaques négatives (28) sont en alliage de plomb comprenant de l'étain dans une quantité de 0,8 à 1,3 % et du calcium dans une quantité de 0,03 à 0,07 %.

11. La batterie plomb-acide selon la revendication 8, **caractérisée en ce que** les plaques négatives (28) sont consistent en une masse négative contenant au moins deux détendeurs organiques et des matériaux à base de carbone, sous forme de noir de carbone, de carbone activé, de graphite ou comme variante d'un mélange de ceux-ci, dans la fourchette allant de 0,3 % à 1,0 %.

12. La batterie plomb-acide selon la revendication 1, **caractérisée en ce que** le niveau de l'électrolyte dans le corps de contenant (12) dépasse l'extrémité de dessus des électrodes (22) et (28) d'au moins 35 mm.
